# EUROPEAN PATENT APPLICATION

(11) **EP 4 546 921 A1**
(43) Date of publication of application: **30.04.2025**
(21) Application number: 22947356.6
(22) Date of filing: 23.06.2022
(51) Int. Cl.: H04W 72/12

(54) **MOBILITY MANAGEMENT METHODS AND APPARATUSES THEREOF**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2022/100929
(87) International publication number: WO 2023/245585

(57) **Abstract**

Disclosed in the embodiments of the present application are mobility management methods and apparatuses thereof, which can be applied to communication systems. A method comprises: performing L1/L2 cell measurement on candidate serving cells of a terminal device to acquire a first measurement result; transmitting to a network device the candidate serving cells and the first measurement result of the candidate serving cells; receiving a cell handover instruction transmitted by the network device, the cell handover instruction comprising a target serving cell; and according to the cell handover instruction, switching from a currently accessed source serving cell of the terminal device to the target serving cell. The embodiments of the present application can shorten a time delay of obtaining a measurement result, thereby quickly determining a target service cell for a terminal device, reducing handover time delays, and improving mobility performance.

## Description

### TECHNICAL FIELD

The disclosure relates to the field of communication technology, and in particular to a method and an apparatus for mobile management (MM).

### BACKGROUND

In a new radio (NR) system, cell measurements, which can be based on layer 3 (L3), require a plurality of measurements for subsequent filtering, and perform mobile management (MM) via a radio resource control (RRC) signaling. This results in a long delay in the MM process, especially in Frequency Range 2 (FR2) scenarios where a cell coverage is relatively small and the long handover delay affects the throughput and mobile performance of a serving cell.

### SUMMARY

Embodiments of the disclosure provide a method and an apparatus for mobile management (MM). By performing layer 1 (L1)/L2 cell measurement on a candidate serving cell, a delay in obtaining a measurement result can be reduced, thus quickly determining a target serving cell of a terminal and reducing the handover delay.

According to a first aspect, a method for MM is provided in an embodiment of the disclosure. The method includes: obtaining a first measurement result, by performing L1/L2 cell measurement on a candidate serving cell of the terminal; sending the candidate serving cell and the first measurement result of the candidate serving cell to a network device; receiving a cell handover instruction sent by the network device, in which the cell handover instruction includes a target serving cell, and the target serving cell is a cell determined from the candidate serving cell; and handing over, based on the cell handover instruction, from a currently accessed source serving cell of the terminal to the target serving cell.

In this technical solution, by performing the L1/L2 cell measurement on the candidate serving cell, the delay in obtaining the measurement result can be reduced, enabling the network device to quickly determine the target serving cell of the terminal. This reduces the handover delay and improves the mobile performance, ensuring that the terminal maintains an optimal connection with the network, and thus guaranteeing the application of various network services.

According to a second aspect, another method for MM is provided in an embodiment of the disclosure. The method includes: receiving a candidate serving cell and a first measurement result of the candidate serving cell sent by a terminal; selecting, based on the first measurement result, a target serving cell from the candidate serving cell; and sending a cell handover instruction to the terminal, in which the cell handover instruction includes the target serving cell.

According to a third aspect, a communication apparatus is provided in an embodiment of the disclosure. The communication apparatus includes partial or all of the functions of the terminal for implementing the method described in the first aspect. For example, the communication apparatus can possess the functions in partial or all of the embodiments in the disclosure, or can possess the functions for implementing any one of the embodiments in the disclosure alone. The functions can be implemented by hardware, or can be implemented by the hardware executing corresponding software. The hardware or software includes one or more units or modules corresponding to the functions.

In an implementation, the communication apparatus can include a transceiver module and a processing module. The processing module is configured to support the communication apparatus to perform the corresponding functions in the method described above. The transceiver module is configured to support communication between the communication apparatus and other devices. The communication device can further include a storage module, in which the storage module is configured to couple with the transceiver module and the processing module, and store necessary computer programs and data of the communication apparatus.

According to a fourth aspect, a communication apparatus is provided in an embodiment of the disclosure. The communication apparatus includes partial or all of the functions of the network device for implementing the method described in the second aspect. For example, the communication apparatus can possess the functions in partial or all of the embodiments in the disclosure, or can possess the functions for implementing any one of the embodiments in the disclosure alone. The functions can be implemented by hardware, or can be implemented by the hardware executing corresponding software. The hardware or software includes one or more units or modules corresponding to the functions.

In an implementation, the communication apparatus can include a transceiver module and a processing module. The processing module is configured to support the communication apparatus to perform the corresponding functions in the method described above. The transceiver module is configured to support communication between the communication apparatus and other devices. The communication device can further include a storage module, in which the storage module is configured to couple with the transceiver module and the processing module, and store necessary computer programs and data of the communication apparatus.

According to a fifth aspect, a communication device is provided in an embodiment of the disclosure. The communication device includes a processor, and when the processor calls a computer program stored in a memory, the method according to the first aspect is implemented.

According to a sixth aspect, a communication device is provided in an embodiment of the disclosure. The communication device includes a processor, and when the processor calls a computer program stored in a memory, the method according to the second aspect is implemented.

According to a seventh aspect, a communication device is provided in an embodiment of the disclosure. The communication device includes a processor and a memory for storing a computer program, and when the computer program is executed by the processor, the communication device is caused to execute the method according to the first aspect.

According to an eighth aspect, a communication device is provided in an embodiment of the disclosure. The communication device includes a processor and a memory for storing a computer program, and when the computer program is executed by the processor, the communication device is caused to execute the method according to the second aspect.

According to a ninth aspect, a communication device is provided in an embodiment of the disclosure. The communication device includes a processor and an interface circuit; in which the interface circuit is configured to receive code instructions and transmit the code instructions to the processor; and when the processor is configured to run the code instructions, the communication device is caused to execute the method according to the first aspect.

According to a tenth aspect, a communication device is provided in an embodiment of the disclosure. The communication device includes a processor and an interface circuit; in which the interface circuit is configured to receive code instructions and transmit the code instructions to the processor; and when the processor is configured to run the code instructions, the communication device is caused to execute the method according to the second aspect.

According to an eleventh aspect, a communication system is provided in an embodiment of the disclosure. The system includes the communication apparatus according to the third aspect and the communication apparatus according to the fourth aspect, or, the system includes the communication device according to the fifth aspect and the communication device according to the sixth aspect, or, the system includes the communication device according to the seventh aspect and the communication device according to the eighth aspect, or, the system includes the communication device according to the ninth aspect and the communication device according to the tenth aspect.

According to a twelfth aspect, a computer-readable storage medium is provided in an embodiment of the disclosure. The computer-readable storage medium is configured to store instructions used by the terminal, in which when the instructions are executed, the terminal is caused to execute the method according to the first aspect.

According to a thirteenth aspect, a computer-readable storage medium is provided in an embodiment of the disclosure. The computer-readable storage medium is configured to store instructions used by the network device, in which when the instructions are executed, the network device is caused to execute the method according to the second aspect.

According to a fourteenth aspect, a computer program product is provided in an embodiment of the disclosure. The computer program product includes a computer program that, when executed on a computer, causes the computer to execute the method according to the first aspect.

According to a fifteenth aspect, a computer program product is provided in an embodiment of the disclosure. The computer program product includes a computer program that, when executed on a computer, causes the computer to execute the method according to the second aspect.

According to a sixteenth aspect, a chip system is provided in an embodiment of the disclosure. The chip system includes at least one processor and an interface, configured to support the terminal to implement the functions involved in the first aspect, for example, to determine or process at least one of the data or information involved in the method described above. In one possible design, the chip system further includes a memory, configured to store the necessary computer programs and data for the terminal. The chip system can be consisted of chips or can include chips and other discrete devices.

According to a seventeenth aspect, a chip system is provided in an embodiment of the disclosure. The chip system includes at least one processor and an interface, configured to support the network device to implement the functions involved in the second aspect, for example, to determine or process at least one of the data or information involved in the method described above. In one possible design, the chip system further includes a memory, configured to store the necessary computer programs and data for the network device. The chip system can be consisted of chips or can include chips and other discrete devices.

According to an eighteenth aspect, a computer program is provided in an embodiment of the disclosure, which, when running on a computer, causes the computer to implement the method according to the first aspect.

According to a nineteenth aspect, a computer program is provided in an embodiment of the disclosure, which, when running on a computer, causes the computer to implement the method according to the second aspect.

### BRIEF DESCRIPTION OF THE DRAWINGS

In order to clearly illustrate a technical solution of embodiments of the disclosure or the related art, description is made below to accompanying drawings used in the embodiments of the disclosure or the related art.
FIG. 1 is a schematic diagram illustrating a communication system according to an embodiment of the disclosure.
FIG. 2 is a flow chart illustrating a method for mobile management (MM) according to an embodiment of the disclosure.
FIG. 3 is a flow chart illustrating another method for MM according to an embodiment of the disclosure.
FIG. 4 is a flow chart illustrating another method for MM according to an embodiment of the disclosure.
FIG. 5 is a flow chart illustrating another method for MM according to an embodiment of the disclosure.
FIG. 6 is a flow chart illustrating another method for MM according to an embodiment of the disclosure.
FIG. 7 is a flow chart illustrating another method for MM according to an embodiment of the disclosure.
FIG. 8 is a block diagram illustrating a communication apparatus according to an embodiment of the disclosure.
FIG. 9 is a block diagram illustrating a communication device according to an embodiment of the disclosure.
FIG. 10 is a block diagram illustrating a chip according to an embodiment of the disclosure.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the present disclosure. Rather, they are merely examples of apparatuses and methods consistent with aspects of the embodiments of the disclosure as recited in the appended claims.

Terms used in the embodiments of the present disclosure are for the purpose of describing specific embodiments only, and are not intended to limit the embodiments of the present disclosure. As used in the examples of this disclosure and the appended claims, the singular forms "a/an" and "the/said" are also intended to include the plural forms unless the context clearly dictates otherwise. It should also be understood that the term "and/or" as used herein refers to and includes any and all possible combinations of one or more of the associated listed items.

It should be understood that although the embodiments of the present disclosure can use the terms first, second, third, etc. to describe various information, the information should not be limited to these terms. These terms are only used to distinguish information of the same type from one another. For example, without departing from the scope of the embodiments of the present disclosure, first information can also be called second information, and similarly, second information can also be called first information. Depending on the context, the word "if" as used herein can be interpreted as "in a case that" or "when" or "in response to a determination". For the purposes of brevity and ease of understanding, the terms "greater than" or "less than" , "higher than" or "lower than" are used herein to characterize size relationships. For those skilled in the field, it is understood that the term "greater than" also covers the meaning of "greater than or equal to", the term "less than" also covers the meaning of "less than or equal to", the term "higher than" covers the meaning of "higher than or equal to", and the term "lower than" covers the meaning of "lower than or equal to".

For ease of understanding, the terms involved in the disclosure are first introduced.

Reference signal received power (RSRP). The RSRP is defined as a linear average of power contributions from resource particles carrying cell-specific reference signals within a measurement bandwidth to be considered. It reflects a "logical distance" of a terminal from a base station.

During the movement of the terminal, it is necessary to implement mobile management (MM), which involves in managing location information, security and service continuity of the terminal, so as to ensure that the terminal maintains an optimal connection with the network, and thus guarantee the application of various network services.

In order to better understand a method for MM according to embodiments of the disclosure, firstly, description is made below to a communication system to which embodiments of the disclosure are applicable.

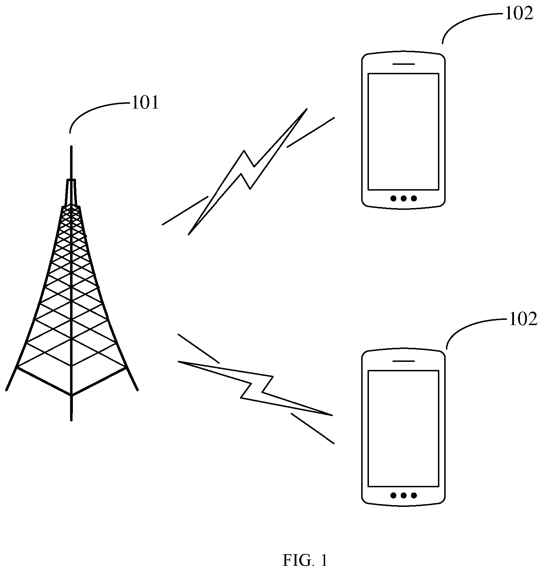

Referring to FIG. 1, it is a schematic diagram illustrating a communication system according to an embodiment of the disclosure. The communication system can include, but is not limited to, one network device and one terminal. The number and form of devices illustrated in FIG. 1 are only for examples and do not constitute a limitation on embodiments of the disclosure, and two or more network devices and two or more terminals can be included in a practical application. The communication system illustrated in FIG. 1 takes an example of including one network device 101 and one terminal 102.

It should be noted that an technical solution of embodiments of the disclosure can be applied to various communication systems, such as a long term evolution (LTE) system, a fifth generation (5G) mobile communication system, a 5G new radio (NR) system, or other future new mobile communication systems. It should also be noted that the sidelink in embodiments of the disclosure can also be referred to as a side link or a direct link.

The network device 101 in embodiments of the disclosure is an entity in a network side for sending or receiving signals. For example, the network device 101 can be an evolved NodeB (eNB), a transmission reception point (TRP), a next generation NodeB (gNB) in an NR system, a base station in other future mobile communication systems or an access node in a wireless fidelity (WiFi) system, etc. The detailed technology and detailed device form employed by the network device are not limited in embodiments of the disclosure. The network device in embodiments of the disclosure can be consisted of a central unit (CU) and a distributed unit (DU). The CU can also be referred to as a control unit. The CU-DU structure can be configured to split a protocol layer of the network device, such as a base station, so that a part of functions of the protocol layer are centrally controlled by the CU, while part or all of remaining functions of the protocol layer are distributed in the DU. The DU is controlled by the CU.

The terminal 102 in embodiments of the disclosure is an entity in a user side for receiving or sending signals, such as a mobile phone. The terminal device can also be referred to as a terminal, a user equipment (UE), a mobile station (MS), a mobile terminal (MT), and the like. The terminal can be an automobile with a communication function, a smart car, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. The detailed technology and detailed device form employed by the terminal are not limited in embodiments of the disclosure.

In a sidelink communication, there are four sidelink transmission modes. A sidelink transmission mode 1 and a sidelink transmission mode 2 are configured for a device-to-device (D2D) communication. A sidelink transmission mode 3 and a sidelink transmission mode 4 are configured for a V2X communication. When the sidelink transmission mode 3 is employed, resource allocation is scheduled by the network device 101. In particular, the network device 101 can send resource allocation information to the terminal 102, which then allocates resources to another terminal to enable the another terminal to send information to the network device 101 via the allocated resources. In the V2X communication, a terminal with a better signal or higher reliability can be used as the terminal 102. The first terminal involved in the embodiments of the disclosure can refer to the terminal 102, and the second terminal can refer to the another terminal.

It should be understood that the communication system described in the embodiments of the disclosure is intended to more clearly illustrate the technical solutions of the embodiments of the disclosure, and does not constitute a limitation on the technical solutions according to embodiments of the disclosure. Those skilled in the art understand that the technical solutions according to embodiments of the disclosure are also applicable to similar technical problems, with the evolution of system architecture and the emergence of a new service scenario.

It should be noted that the method for MM provided in any one of the embodiments in the disclosure can be implemented alone, or in combination with possible implementations in other embodiments, and can also be implemented in combination with any of the technical solutions in the related art.

Description is made in detail below to a method and an apparatus for MM according to the disclosure with reference to accompanying drawings.

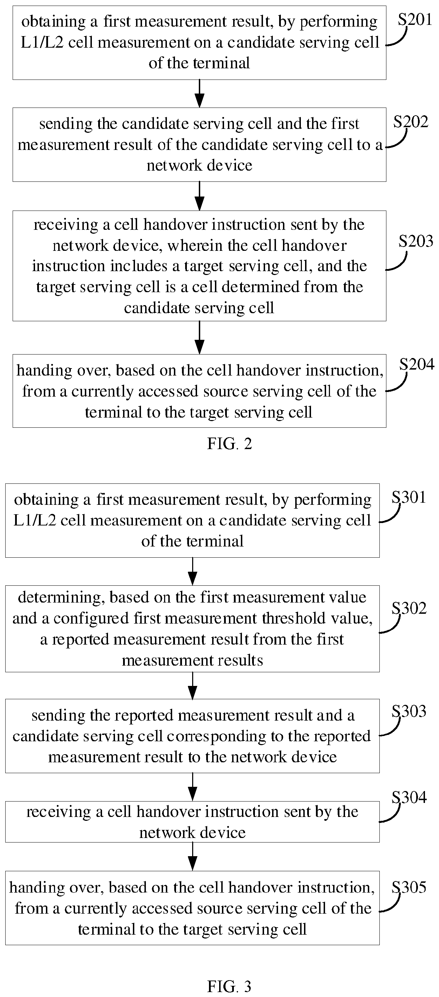

Referring to FIG. 2, it is a flow chart illustrating a method for MM according to an embodiment of the disclosure. The method is performed by a terminal. As shown in FIG. 2, the method can include, but is not limited to, the following steps S201 to S204.

At S201, a first measurement result is obtained, by performing layer 1 (L1)/L2 cell measurement on a candidate serving cell of the terminal.

When the signal quality of a source serving cell accessed by the terminal is too low, in order to ensure that the terminal maintains an optimal connection with the network, and thus guarantee the application of various network services, the cell handover in the MM of the terminal is required. That is, the terminal completes migration of the radio link connection from the source serving cell to the target serving cell under the control of the radio access network.

It should be noted that the premise of the cell handover is to measure the signal quality of the candidate serving cell of the terminal, in order to select a target serving cell with better signal quality for the terminal from the candidate serving cell.

In embodiments of the disclosure, there may be one or more candidate serving cells of the terminal. Optionally, the candidate serving cell can be a neighboring cell of the source serving cell. Optionally, the candidate serving cell can use the same radio frequency (RF) carrier frequency as a currently accessed source serving cell; or, the candidate serving cell can use a different RF carrier frequency from the source serving cell. In some implementations, the candidate serving cell can belong to the same base station as the source serving cell; or, the candidate serving cell may not belong to the same base station as the source serving cell. This is not limited in the embodiments of the disclosure.

Optionally, the candidate serving cell can be indicated to the terminal by the network device. For example, the terminal can receive indication information, and the indication information carries a cell identification or an index or an offset of the cell identification of the candidate serving cell. For example, the indication information can carry a cell list, and the cell list includes the cell identification or the index or the offset of the cell identification of the candidate serving cell.

In an embodiment of the disclosure, the network device can enable the terminal to perform the measurement on the candidate serving cell via configuration information of a physical layer (i.e., L1) or via an activation signaling of the media access control (MAC) layer (i.e., L2), i.e., to perform the L1/L2 measurement on the candidate serving cell of the terminal.

It should be noted that in an embodiment of the disclosure, performing the L1 measurement on the candidate serving cell by the terminal refers to the terminal receiving a radio resource control (RRC) signaling sent by the network device at the physical layer. The configuration information in the RRC signaling indicates the terminal to perform the measurement on the candidate serving cell. For example, the network device can instruct the terminal to perform the measurement on the candidate serving cell via an RRC connection reconfiguration message. Performing the L2 measurement on the candidate serving cell by the terminal refers to the terminal receiving the MAC activation signaling sent by the network device at the MAC layer. The MAC activation signaling is configured to activate the terminal to perform the measurement on the candidate serving cell.

At S202, the candidate serving cell and the first measurement result of the candidate serving cell are sent to the network device.

After measuring the candidate serving cell, the terminal can obtain a first measurement result of the candidate serving cell. The first measurement result can reflect the signal strength/quality of the candidate serving cell.

Optionally, the terminal can bind the cell identification of the candidate serving cell with the corresponding first measurement result, and send it to the network device.

In some implementations, the terminal can send the cell identification of each candidate serving cell and the corresponding first measurement result to the network device. In other implementations, the terminal can perform filtering on the candidate serving cell based on the first measurement result, so as to determine a candidate serving cell with the first measurement result satisfying a preset condition, and send a cell identification of the candidate serving cell satisfying the preset condition and a corresponding first measurement result to the network device. For example, the terminal can determine some candidate serving cells with better quality based on the first measurement results, and send the cell identifications of the candidate serving cells with better quality and corresponding first measurement results to the network device, so as to reduce the signaling overhead and save resources.

At S203, a cell handover instruction sent by the network device is received, in which the cell handover instruction includes a target serving cell, and the target serving cell is a cell determined from the candidate serving cells.

After the terminal reports the candidate serving cells and the first measurement results of the candidate serving cells to the network device, the network device can select, based on the reported first measurement results, a candidate serving cell that satisfies a handover condition from the reported candidate serving cells as a target serving cell. For example, the handover condition can include that the cell quality meets the requirements, or the cell is in an idle state, etc. The network device determines the cell handover instruction based on the target serving cell and indicates the cell handover instruction to the terminal. Accordingly, the terminal receives the cell handover instruction sent by the network device. The cell handover instruction includes a cell identification or an index or an offset of the cell identification of the target serving cell. Optionally, the terminal can receive the cell handover instruction sent by the network device via an RRC signaling or a downlink control information (DCI) signaling or an MAC-CE signaling.

At S204, a currently accessed source serving cell of the terminal is handed over to the target serving cell based on the cell handover instruction.

After receiving the cell handover instruction, the terminal can determine handing over to the target serving cell that needs to be accessed by the terminal for handover. The terminal performs an information interaction process of the cell handover with the network device to realize the handover from the currently accessed source serving cell of the terminal to the target serving cell.

Optionally, if the target serving cell and the currently accessed source serving cell use the same RF carrier frequency, intra-frequency handover is performed. Optionally, if the target serving cell and the source serving cell use different RF carrier frequencies, inter-frequency handover is performed.

In the case that the target serving cell and the source serving cell belong to the same base station, the cell handover within the base station is performed. In the case that the target serving cell and the source serving cell do not belong to the same base station, the cell handover between base stations is performed.

In some implementations, during the cell handover, the terminal can first disconnect from the source serving cell and then connect to the target serving cell. In other implementations, during the cell handover, the terminal can maintain a connection with the source serving cell until the terminal connects to (accesses) the target serving cell, and then disconnect from the source serving cell.

In embodiments of the disclosure, by performing the L1/L2 cell measurement on the candidate serving cell, the delay in obtaining the measurement result can be reduced, enabling the network device to quickly determine the target serving cell of the terminal. This reduces the handover delay and improves the mobile performance, ensuring that the terminal maintains the optimal connection with the network, and thus guaranteeing the application of various network services.

Referring to FIG. 3, it is a flow chart illustrating another method for MM according to an embodiment of the disclosure. The method is performed by a terminal. As shown in FIG. 3, the method can include, but is not limited to, the following steps S301 to S305.

At S301, a first measurement result is obtained, by performing L1/L2 cell measurement on a candidate serving cell of the terminal.

The specific description of step S301 can refer to the relevant contents described in the above embodiments, and will not be repeated herein.

It should be noted that the first measurement result includes a measurement object for the cell measurement and a first measurement value of the measurement object. The measurement object includes at least one of: a synchronization signal (SS)-RSRP or a channel state information (CSI)-L1-RSRP.

Optionally, the measurement object can be determined based on a protocol agreement, or be predefined or preconfigured, or be indicated to the terminal by the network device. This is not limited in the embodiments of the disclosure.

At S302, a reported measurement result is determined from the first measurement results based on the first measurement value and a configured first measurement threshold value.

The first measurement threshold value is configured to determine a critical value of the quality of the candidate serving cell. If the measurement values of some measurement objects are less than the corresponding measurement threshold values, it indicates that the quality of the candidate serving cell is good. If the measurement values of some other measurement objects are greater than or equal to the corresponding measurement threshold values, it indicates that the quality of the candidate serving cell is good.

In an embodiment of the disclosure, each first measurement value of each measurement object in the first measurement result of each candidate serving cell can be compared with the corresponding first measurement threshold value, and a first measurement result of a candidate serving cell with better quality can be selected as the reported measurement result. Optionally, the first measurement result of the candidate serving cell with better quality can mean that each first measurement value of each measurement object satisfy the requirement of better quality, or can mean that the first measurement values of some of the measurement objects satisfy the requirement of better quality. For example, the first measurement values of 80% of the measurement objects may all satisfy the requirement of better quality.

Optionally, the first measurement threshold value can be determined based on a protocol agreement, or be predefined or preconfigured, or be indicated to the terminal by the network device. This is not limited in the embodiments of the disclosure.

At S303, the reported measurement result and a candidate serving cell corresponding to the reported measurement result are sent to the network device.

In an embodiment of the disclosure, after the terminal sends the reported measurement result and the candidate serving cell corresponding to the reported measurement result to the network device, the network device can select, based on the reported measurement result, a candidate serving cell that satisfies the handover condition from the reported candidate serving cells as the target serving cell.

At S304, a cell handover instruction sent by the network device is received.

The cell handover instruction includes a target serving cell, and the target serving cell is a cell determined from the reported candidate serving cells.

The network device determines the cell handover instruction based on the target serving cell and indicates the cell handover instruction to the terminal. Accordingly, the terminal receives the cell handover instruction sent by the network device. The cell handover instruction includes a cell identification or an index or an offset of the cell identification of the target serving cell. Optionally, the terminal can receive the cell handover instruction sent by the network device via an RRC signaling or a DCI signaling or an MAC CE signaling.

At S305, a currently accessed source serving cell of the terminal is handed over to the target serving cell based on the cell handover instruction.

The specific description of step S305 can refer to the relevant contents described in the above embodiments, and will not be repeated herein.

In embodiments of the disclosure, by performing the L1/L2 cell measurement on the candidate serving cell, the delay in obtaining the measurement result can be reduced, enabling the network device to quickly determine the target serving cell of the terminal. This reduces the handover delay and improves the mobile performance, ensuring that the terminal maintains the optimal connection with the network, and thus guaranteeing the application of various network services.

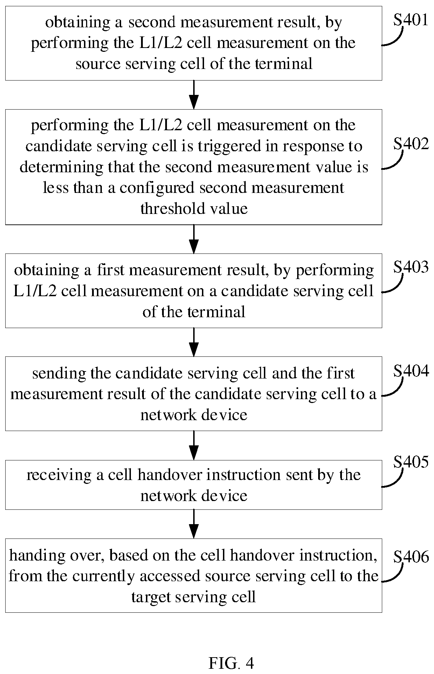

Referring to FIG. 4, FIG. 4 is a flow chart illustrating another method for MM according to an embodiment of the disclosure. The method is performed by a terminal. As shown in FIG. 4, the method can include, but is not limited to, the following steps S401 to S406.

At S401, a second measurement result is obtained, by performing the L1/L2 cell measurement on the source serving cell.

The second measurement result includes a measurement object for the cell measurement on the source serving cell and a second measurement value of the measurement object.

The process of performing the L1/L2 cell measurement on the source serving cell by the terminal is similar to the process of performing the L1/L2 cell measurement on the candidate serving cell. The specific process can refer to the relevant contents described in the above embodiments, and will not be repeated herein.

At S402, performing the L1/L2 cell measurement on the candidate serving cell is triggered in response to determining that the second measurement value is less than a configured second measurement threshold value.

The second measurement threshold value is configured to determine a critical value of the quality of the source serving cell. In an embodiment of the disclosure, each second measurement value of each measurement object in the second measurement result of the source serving cell can be compared with the corresponding second measurement threshold value. If there is a second measurement value that is less than the configured second measurement threshold value, it can be determined that the signal quality of the source serving cell has deteriorated. In an embodiment of the disclosure. In order to ensure that the terminal maintains the optimal connection with the network and thus guarantee the application of various network services, the L1/L2 cell measurement on the candidate serving cell is triggered in the embodiments of the disclosure.

Optionally, the second measurement threshold value can be determined based on a protocol agreement, or be predefined or preconfigured, or be indicated to the terminal by the network device. This is not limited in the embodiments of the disclosure.

At S403, a first measurement result is obtained, by performing L1/L2 cell measurement on a candidate serving cell of the terminal.

At S404, the candidate serving cell and the first measurement result of the candidate serving cell are sent to a network device.

At S405, a cell handover instruction sent by the network device is received.

The cell handover instruction includes a target serving cell, and the target serving cell is a cell determined from the candidate serving cells.

At S406, the source serving cell is handed over to the target serving cell based on the cell handover instruction.

The implementation of steps S403 to 406 can be the same as that in any of the embodiments of the disclosure, and will not be repeated herein.

In embodiments of the disclosure, by performing the L1/L2 cell measurement on the candidate serving cell, the delay in obtaining the measurement result can be reduced, enabling the network device to quickly determine the target serving cell of the terminal. This reduces the handover delay and improves the mobile performance, ensuring that the terminal maintains the optimal connection with the network, and thus guaranteeing the application of various network services.

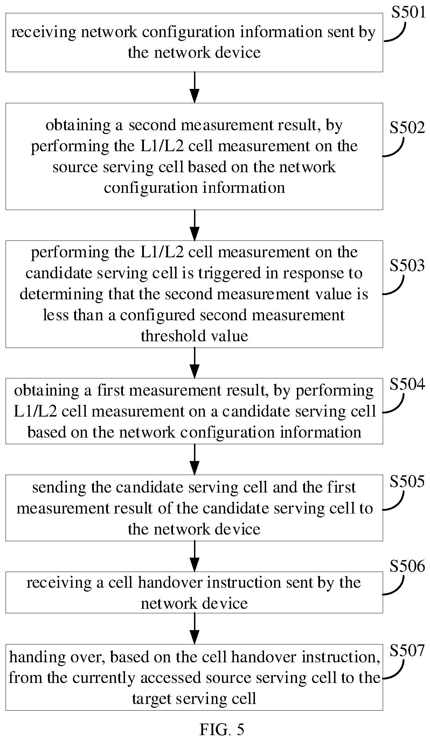

Referring to FIG. 5, it is a flow chart illustrating another method for MM according to an embodiment of the disclosure. The method is performed by a terminal. As shown in FIG. 5, the method can include, but is not limited to, the following steps S501 to S507.

At S501, network configuration information sent by the network device is received.

The network configuration information includes at least a measurement object and a measurement reporting configuration value for the L1/L2 cell measurement on the candidate serving cell, and a measurement object and a measurement reporting configuration value for the L1/L2 cell measurement on the source serving cell.

Optionally, the measurement object includes at least one of: an SS-RSRP or a CSI-L1-RSRP.

Optionally, the measurement reporting configuration value can include a measurement threshold value corresponding to the measurement object. The quality of the measurement object is determined based on the measurement threshold value.

For example, a first threshold value T₁ corresponding to the SS-RSRP or the CSI-L1-RSRP that reflects the signal strength of the candidate serving cell can be determined via the measurement reporting configuration value. For example, a second threshold value T₂ corresponding to the SS-RSRP or the CSI-L1-RSRP that reflects the signal strength of the source serving cell can be determined via the measurement reporting configuration value.

Optionally, the network configuration information can also include a mode of reporting the measurement results, including, such as a number of reports, a reporting interval, etc.

At S502, a second measurement result is obtained, by performing the L1/L2 cell measurement on the source serving cell based on the network configuration information.

Based on the network configuration information, a measurement object of the source serving cell can be determined, and the second measurement result is obtained by performing the L1/L2 cell measurement on the source serving cell based on the measurement object, i.e., the second measurement value of the measurement object for the source serving cell is obtained by the measurement. The measurement object for the source serving cell can be the same as or different from the measurement object for the candidate serving cell.

A description of the L1/L2 cell measurement performed on the source serving cell can refer to the relevant contents described in the above embodiments, and will not be repeated herein.

At S503, performing the L1/L2 cell measurement on the candidate serving cell is triggered in response to determining that the second measurement value is less than a configured second measurement threshold value.

When the terminal performs the measurement on the source serving cell and obtains a signal quality of the source serving cell such as L1-RSRP, and the second measurement value of the L1-RSRP is lower than the configured second measurement threshold value T2, the terminal can trigger to perform the measurement on the signal quality of the candidate serving cell.

At S504, a first measurement result is obtained, by performing L1/L2 cell measurement on a candidate serving cell based on the network configuration information.

Based on the network configuration information, a measurement object for the candidate serving cell can be determined, and the first measurement result is obtained by performing the L1/L2 cell measurement on the candidate serving cell based on the measurement object. The specific process can refer to the relevant contents described in the above embodiments, and will not be repeated herein.

A description of the L1/L2 cell measurement performed on the candidate serving cell can refer to the relevant contents described in the above embodiments, and will not be repeated herein.

At S505, the candidate serving cell and the first measurement result of the candidate serving cell are sent to the network device.

For example, the terminal obtains the L1-RSRP of the candidate serving cell by measurement, selects a first measurement value of the L1-RSRP greater than or equal to the first threshold value T1 as the reported measurement result, and sends the reported measurement result and the corresponding candidate serving cell to the network device.

The implementation of step S505 can be the same as that in any of the embodiments of the disclosure, and will not be repeated herein.

At S506, a cell handover instruction sent by the network device is received.

The cell handover instruction includes a target serving cell, and the target serving cell is a cell determined from the candidate serving cells.

At S507, the source serving cell is handed over to the target serving cell based on the cell handover instruction.

The implementation of steps S506 to S507 can be the same as that in any of the embodiments of the disclosure, and will not be repeated herein.

In embodiments of the disclosure, by performing the L1/L2 cell measurement on the candidate serving cell, the delay in obtaining the measurement result can be reduced, enabling the network device to quickly determine the target serving cell of the terminal. This reduces the handover delay and improves the mobile performance, ensuring that the terminal maintains an optimal connection with the network, and thus guaranteeing the application of various network services.

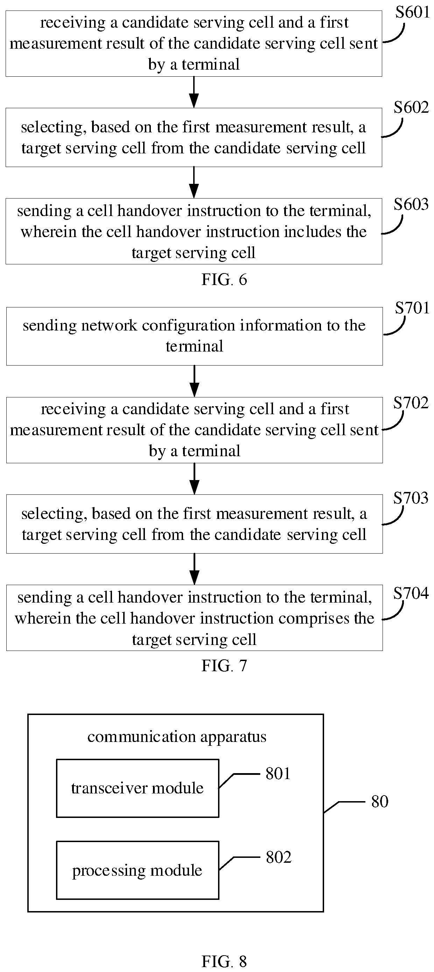

Referring to FIG. 6, it is a flow chart illustrating another method for MM according to an embodiment of the disclosure. The method is performed by a network device. As shown in FIG. 6, the method can include, but is not limited to, the following steps S601 to S603.

At S601, a candidate serving cell and a first measurement result of the candidate serving cell sent by a terminal are received.

When signal quality of a source serving cell accessed by the terminal is too low, in order to ensure that the terminal maintains an optimal connection with the network, and thus guarantee the application of various network services, the cell handover in the MM of the terminal is required. That is, the terminal completes the migration of the radio link connection from the source serving cell to the target serving cell under the control of the radio access network.

It should be noted that the premise of the cell handover is to measure the signal quality of the candidate serving cell of the terminal, so that the network device selects a target serving cell with better signal quality for the terminal from the candidate serving cells.

In embodiments of the disclosure, here may be one or more candidate serving cells of the terminal. Optionally, the network device can configure the candidate serving cell to the terminal.

In an embodiment of the disclosure, the network device can enable the terminal to perform the measurement on the candidate serving cell via configuration information of L1 or via an activation signaling of L2, i.e., to perform the L1/L2 measurement on the candidate serving cell of the terminal. The description of the L1/L2 cell measurement can refer to the relevant contents described in the above embodiments, and will not be repeated herein.

After measuring the candidate service cell, the terminal can obtain a first measurement result of the candidate service cell. The first measurement result can reflect the signal strength/quality of the candidate service cell.

Optionally, the network device can receive the cell identification of the candidate serving cell and the corresponding first measurement result sent by the terminal. In some implementations, the network device can receive the cell identification of each candidate serving cell and the corresponding first measurement result sent by the terminal. In other implementations, the network device can receive candidate serving cells determined/selected by the terminal based on the first measurement results. Optionally, the first measurement results of the selected candidate serving cells need to satisfy a preset condition. For example, the candidate serving cells received by the network device are some candidate serving cells with better quality, and the terminal sends the cell identifications of these candidate serving cells with better quality and corresponding first measurement results to the network device, so as to reduce the signaling overhead and save the resources.

At S602, a target serving cell from the candidate serving cell is selected based on the first measurement result.

After the terminal reports the candidate serving cells and the first measurement results of the candidate serving cells to the network device, the network device can select, based on the reported first measurement results, a candidate serving cell that satisfies a handover condition from the reported candidate serving cells as a target serving cell. For example, the handover condition can include that the cell quality meets the requirements, or the cell is in an idle state, etc.

At S603, a cell handover instruction is sent to the terminal, in which the cell handover instruction includes the target serving cell.

The network device determines the cell handover instruction based on the target serving cell and indicates the cell handover instruction to the terminal. Accordingly, the terminal receives the cell handover instruction sent by the network device. The cell handover instruction includes a cell identification or an index or an offset of the cell identification of the target serving cell. Optionally, the terminal can receive the cell handover instruction sent by the network device via an RRC signaling or a DCI signaling or an MAC CE signaling.

Accordingly, after receiving the cell handover instruction, the terminal can determine handing over to the target serving cell that needs to be accessed by the terminal. The terminal performs an information interaction process of the cell handover with the network device to realize the handover from the currently accessed source serving cell of the terminal to the target serving cell.

Referring to FIG. 7, it is a flow chart illustrating another method for MM according to an embodiment of the disclosure. The method is performed by a network device. As shown in FIG. 7, the method can include, but is not limited to, the following steps S701 to S704.

At S701, network configuration information is sent to the terminal.

The network configuration information includes at least a measurement object and a measurement reporting configuration value for the L1/L2 cell measurement of the candidate serving cell, and the measurement object and a measurement reporting configuration value for the L1/L2 cell measurement of the source serving cell.

Optionally, the measurement object includes at least one of: an L1-RSRP, an SS-RSRP, a CSI-RSRP, and a reference signal received quality (RSRQ).

Optionally, the measurement reporting configuration value can include a measurement threshold value corresponding to the measurement object. The quality of the measurement object is determined based on the measurement threshold value.

For example, a first threshold value T₁ corresponding to the L1-RSRP, the SS-RSRP, the CSI-RSRP, or the RSRQ that reflects the signal strength of the candidate serving cell can be determined via the measurement reporting configuration value. For example, a second threshold value T₂ corresponding to the L1-RSRP, the SS-RSRP, the CSI-RSRP, or the RSRQ that reflects the signal strength of the source serving cell can be determined via the measurement reporting configuration value.

Optionally, the network configuration information can also include a mode of reporting the measurement results, including, such as the number of reports, the reporting interval, etc.

At S702, a candidate serving cell and a first measurement result of the candidate serving cell sent by a terminal are received.

Optionally, the first measurement result includes a measurement object for L1/L2 cell measurement and a first measurement value of the measurement object. In embodiments of the disclosure, the first measurement result received by the network device is a reported measurement result determined by the terminal based on the first measurement value and the configured first measurement threshold value. Accordingly, the candidate serving cell received by the network device is a candidate serving cell corresponding to the reported measurement result. For example, the first measurement result received by the network device is a reported measurement result with a first measurement value being greater than or equal to the configured first measurement threshold value.

At S703, a target serving cell from the candidate serving cell is selected based on the first measurement result.

At S704, a cell handover instruction is sent to the terminal, in which the cell handover instruction includes the target serving cell.

The implementation of steps S506 to S507 can be the same as that in any of the embodiments of the disclosure, and will not be repeated herein.

In embodiments of the disclosure, by performing the L1/L2 cell measurement on the candidate serving cell, the delay in obtaining the measurement result can be reduced, enabling the network device to quickly determine the target serving cell of the terminal. This reduces the handover delay and improves the mobile performance, ensuring that the terminal maintains the optimal connection with the network, and thus guaranteeing the application of various network services.

In the embodiments of the disclosure, description is made to the method according to embodiments of the disclosure from the perspectives of the network device and the first terminal respectively. In order to realize each of the functions in the method according to the above embodiments of the disclosure, the network device and the first terminal can include a hardware structure, a software module, and each of the above functions is realized in the form of the hardware structure, the software module, or a combination of the hardware structure and the software module. A certain function of the above functions can be executed in the form of the hardware structure, the software module, or the combination of the hardware structure and the software module.

Referring to FIG. 8, it is a block diagram illustrating a communication apparatus according to an embodiment of the disclosure. As shown in FIG. 8, the apparatus 80 can include a transceiver module 801 and a processing module 802. The transceiver module 801 can include a sending module and/or a receiving module. The sending unit is configured to implement a sending function, and the receiving unit is configured to implement a receiving function. The transceiver module 801 can implement the sending function and/or the receiving function.

The apparatus 80 can be a terminal, an apparatus in the terminal, or an apparatus that can be used in match to the terminal. Alternatively, the apparatus 80 can be a network device, an apparatus in the network device, or an apparatus that can be used in match to the network device.

The apparatus 80 can be the terminal.

In this case, the processing module 802 is configured to obtain a first measurement result, by performing L1/L2 cell measurement on a candidate serving cell of the terminal, and hand over, based on the cell handover instruction, from a currently accessed source serving cell of the terminal to the target serving cell.

The transceiver module 801 is configured to send the candidate serving cell and the first measurement result of the candidate serving cell to a network device; and receive a cell handover instruction sent by the network device, in which the cell handover instruction includes a target serving cell, and the target serving cell is a cell determined from the candidate serving cell.

Optionally, the first measurement result includes a measurement object for the L1/L2 cell measurement and a first measurement value of the measurement object. The transceiver module 801 is further configured to determine a first measurement result that a first measurement value is greater than or equal to a configured first measurement threshold value, as a reported measurement result; and send the reported measurement result and a candidate serving cell corresponding to the reported measurement result to the network device.

Optionally, the processing module 802 is configured to obtain a second measurement result, by performing the L1/L2 cell measurement on the source serving cell; in which the second measurement result includes a measurement object for the L1/L2 cell measurement on the source serving cell and a second measurement value of the measurement object, and performing the L1/L2 cell measurement on the candidate serving cell is triggered in response to determining that the second measurement value is less than a configured second measurement threshold value.

Optionally, the transceiver module 801 is further configured to receive network configuration information sent by the network device, in which the network configuration information includes at least a measurement object and a measurement reporting configuration value for the L1/L2 cell measurement on the candidate serving cell, and a measurement object and a measurement reporting configuration value for the L1/L2 cell measurement on the source serving cell.

Optionally, the measurement object includes at least one of: an SS-RSRP or a CSI-L1-RSRP.

Optionally, the measurement reporting configuration value includes a measured and reported measurement threshold value corresponding to each measurement object.

The apparatus 80 can be the network device.

In this case, the transceiver module 801 is configured to receive a candidate serving cell and a first measurement result of the candidate serving cell sent by a terminal; and send a cell handover instruction to the terminal, in which the cell handover instruction includes the target serving cell.

The processing module 801 is configured to select, based on the first measurement result, a target serving cell from the candidate serving cell.

Optionally, the first measurement result includes a measurement object for L1/L2 cell measurement and a first measurement value of the measurement object, the first measurement result received by the network device is a reported measurement result with a first measurement value being greater than or equal to a configured first measurement threshold value; and the candidate serving cell received by the network device is a candidate serving cell corresponding to the reported measurement result.

Optionally, the transceiver module 801is further configured to send network configuration information to the terminal, in which the network configuration information includes at least a measurement object and a measurement reporting configuration value for the L1/L2 cell measurement of the candidate serving cell, and a measurement object and a measurement reporting configuration value for the L1/L2 cell measurement of the source serving cell.

Optionally, the measurement object includes at least one of: an SS-RSRP or a CSI-L1-RSRP.

Optionally, the measurement reporting configuration value includes a measured and reported measurement threshold value corresponding to each measurement object.

In embodiments of the disclosure, by performing the L1/L2 cell measurement on the candidate serving cell, the delay in obtaining the measurement result can be reduced, enabling the network device to quickly determine the target serving cell of the terminal. This reduces the handover delay and improves the mobile performance, ensuring that the terminal maintains the optimal connection with the network, and thus guaranteeing the application of various network services.

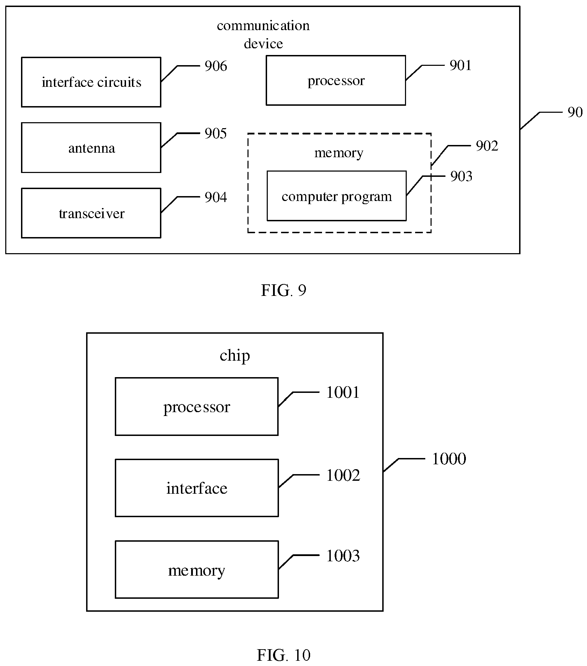

Referring to FIG. 9, it is a structural block diagram illustrating a communication device 90 provided in an embodiment of the disclosure. The communication device 90 can be a network device, a terminal, or a chip, a chip system or a processor that supports the network device to realize the above-described methods, or a chip, a chip system or a processor that supports the terminal to realize the above-described methods. The device can be configured to realize the methods described in the above method embodiments, and for details, please refer to the descriptions of the above-described method embodiments.

The communication device 90 can include one or more processors 901. The processor 901 can be a general purpose processor or a dedicated processor, such as, a baseband processor or a central processor. The baseband processor is configured to process a communication protocol and communication data. The central processor is configured to control the communication device (e.g., a base station, a baseband chip, a terminal, a terminal chip, a CU or a DU), to executing a computer program, and to process data of the computer program.

Optionally, the communication device 90 can include one or more memories 902 on which a computer program 903 can be stored. The processor 901 executes the computer program 903 to cause the communication device 90 to perform the methods described in the above method embodiments. Optionally, data can also be stored in the memory 902. The communication device 90 and the memory 902 can be provided separately or can be integrated together.

Optionally, the communication device 90 can also include a transceiver 904 and an antenna 905. The transceiver 904 can be referred to as a transceiver unit, a transceiver machine, or a transceiver circuit, for realizing a receiving and sending function. The transceiver 904 can include a receiver and a sender. The receiver can be referred to as a receiver machine or a receiving circuit, for realizing a receiving function. The sender can be referred to as a sending machine or sending circuit, for realizing the sending function.

Optionally, the communication device 90 can also include one or more interface circuits 906. The interface circuits 906 are configured to receive code instructions and transmit the code instructions to the processor 901. The code instructions are executed by the processor 901 to cause the communication device 90 to perform the method described in the method embodiments.

The communication device 90 is a terminal configured to implement the functions of the terminal in the preceding embodiments.

The communication device 90 is a network device configured to implement the functions of the network device in the preceding embodiments.

In an implementation, the processor 901 can include a transceiver for implementing the receiving and sending function. For example, the transceiver can be a transceiver circuit, an interface, or an interface circuit. The transceiver circuit, interface, or interface circuit for implementing the receiving and sending function can be separated, or can be integrated together. The transceiver circuit, interface, or interface circuit described above can be configured for reading and writing of code/data, or can be configured for signal sending or delivery.

In an implementation, the processor 901 can store the computer program 903. The processor 901 executes the computer program 903 to cause the communication device 90 to perform the methods described in the above method embodiments. The computer program 903 can be solidified in the processor 901, in which case the processor 901 can be implemented by hardware.

In an implementation, the communication device 90 can include circuits. The circuits can implement the sending, receiving or communicating function in the above method embodiments. The processor and the transceiver described in the disclosure can be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver can also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments can be the network device or the terminal, but a scope of the communication device described in the disclosure is not limited herein, and a structure of the communication device can not be limited by FIG. 9. The communication device can be a stand-alone device or can be part of a larger device. For example the communication device can be:
(1) a stand-alone IC, a chip, a chip system or a subsystem;
(2) a collection of ICs including one or more ICs, where alternatively, the collection of ICs can also include storage components for storing data and a computer program;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For the case where the communication device can be the chip or the chip system, please refer to the block diagram of the chip illustrated in FIG. 10. The chip illustrated in FIG. 10 includes a processor 1001 and an interface 1002. There can be one or more processors 1001, and there can be a plurality of interfaces 1002.

For the case where the chip is configured to implement the functions of the terminal in the embodiments of the disclosure, the situation is as follows.

The processor 1001 is configured to obtain a first measurement result, by performing L1/L2 cell measurement on a candidate serving cell of the terminal, and hand over, based on the cell handover instruction, from a currently accessed source serving cell of the terminal to the target serving cell.

The interface 1002 is configured to send the candidate serving cell and the first measurement result of the candidate serving cell to a network device; and receive a cell handover instruction sent by the network device, in which the cell handover instruction includes a target serving cell, and the target serving cell is a cell determined from the candidate serving cell

Optionally, the first measurement result includes a measurement object for the L1/L2 cell measurement and a first measurement value of the measurement object. The interface 1002 is further configured to determine a first measurement result that a first measurement value is greater than or equal to a configured first measurement threshold value, as a reported measurement result; and send the reported measurement result and a candidate serving cell corresponding to the reported measurement result to the network device.

Optionally, the processor 1001 configured to obtain a second measurement result, by performing the L1/L2 cell measurement on the source serving cell; in which the second measurement result includes a measurement object for the L1/L2 cell measurement on the source serving cell and a second measurement value of the measurement object, and performing the L1/L2 cell measurement on the candidate serving cell is triggered in response to determining that the second measurement value is less than a configured second measurement threshold value.

Optionally, the interface 1002 is further configured to receive network configuration information sent by the network device, in which the network configuration information includes at least a measurement object and a measurement reporting configuration value for the L1/L2 cell measurement on the candidate serving cell, and a measurement object and a measurement reporting configuration value for the L1/L2 cell measurement on the source serving cell.

Optionally, the measurement object includes at least one of: an SS-RSRP or a CSI-L1-RSRP.

Optionally, the measurement reporting configuration value includes a measured and reported measurement threshold value corresponding to each measurement object.

For the case where the chip is configured to implement the functions of the network device in the embodiments of the disclosure, the situation is as follows.

The interface 1002 is configured to receive a candidate serving cell and a first measurement result of the candidate serving cell sent by a terminal; and send a cell handover instruction to the terminal, in which the cell handover instruction includes the target serving cell.

The processor 1001 is configured to select, based on the first measurement result, a target serving cell from the candidate serving cell.

Optionally, the first measurement result includes a measurement object for L1/L2 cell measurement and a first measurement value of the measurement object, the first measurement result received by the network device is a reported measurement result with a first measurement value being greater than or equal to a configured first measurement threshold value; and the candidate serving cell received by the network device is a candidate serving cell corresponding to the reported measurement result.

Optionally, the interface 1002, is further configured to send network configuration information to the terminal, in which the network configuration information includes at least a measurement object and a measurement reporting configuration value for the L1/L2 cell measurement of the candidate serving cell, and a measurement object and a measurement reporting configuration value for the L1/L2 cell measurement of the source serving cell.

Optionally, the measurement object includes at least one of: an SS-RSRP or a CSI-L1-RSRP.

Optionally, the measurement reporting configuration value includes a measured and reported measurement threshold value corresponding to each measurement object.

Optionally, the chip further includes a memory 1003 configured to store necessary computer programs and data.

In embodiments of the disclosure, by performing the L1/L2 cell measurement on the candidate serving cell, the delay in obtaining the measurement result can be reduced, enabling the network device to quickly determine the target serving cell of the terminal. This reduces the handover delay and improves the mobile performance, ensuring that the terminal maintains the optimal connection with the network, and thus guaranteeing the application of various network services.

It may be understood by those skilled in the art that various illustrative logical blocks and steps listed in embodiments of the disclosure can be implemented by electronic hardware, computer software, or a combination of both. Whether such function is implemented by hardware or software depends on a particular application and a design requirement of an entire system. Those skilled in the art can use various methods to implement the described function for each particular application, but such implementation should not be construed as going beyond the scope of protection of embodiments of the disclosure.

Embodiments of the disclosure also provide a system for MM. The system includes a communication apparatus as a terminal and a communication apparatus as a network device in the embodiment illustrated FIG. 8; or, the system includes a communication device as a terminal and a communication device as a network device in the embodiment illustrated in FIG. 9.

The disclosure also provides a readable storage medium for storing instructions. When the instructions are executed by a computer, the functions of any of the method embodiments described above are implemented.

The disclosure also provides a computer program product. When the computer program product is executed by a computer, the functions of any of the method embodiments described above are implemented.

The above embodiments can be implemented in whole or in part by software, hardware, firmware, or any combination of them. When implemented using software, the above embodiments can be implemented, in whole or in part, in the form of the computer program product. The computer program product includes one or more computer programs. When the computer program is loaded and executed on the computer, all or part of the processes or functions described in embodiments of the disclosure is implemented. The computer can be a general-purpose computer, a dedicated computer, a computer network, or other programmable devices. The computer program can be stored in a computer-readable storage medium or transmitted from one computer-readable storage medium to another computer-readable storage medium. For example, the computer program can be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium can be any available medium to which the computer has access to or a data storage device such as a server and a data center integrated by one or more available media. The available medium can be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure can also be described as one or more, and the term "a plurality of" can be two, three, four, or more, which is not limited in the disclosure. In embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

The correspondences illustrated in the tables in the disclosure can be configured or can be predefined. The values of information in the tables are merely examples and can be configured to other values, which are not limited in the disclosure. In configuring the correspondence between the information and the parameters, there does not require that all the correspondences illustrated in the tables must be configured. For example, the correspondences illustrated in some rows of the tables may be not configured. For example, the above tables can be adjusted appropriately, such as splitting, merging, and the like. The names of the parameters illustrated in the headings of the above tables can be other names that are understood by the communication device, and the values or representations of the parameters can be other values or expressions that are understood by the communication device. Each of the above tables can also be implemented with other data structures, such as, arrays, queues, containers, stacks, linear tables, pointers, chained lists, trees, graphs, structures, classes, heaps, and hash tables.

The term "pre-defined" in the disclosure can be understood as defined, pre-defined, stored, pre-stored, pre-negotiated, pre-configured, solidified, or pre-fired.

Those skilled in the art can realize that the units and algorithmic steps of the various examples described in combination with the embodiments disclosed herein are capable of being implemented in the form of the electronic hardware, or a combination of the computer software and the electronic hardware. Whether these functions are performed in the hardware or software depends on the particular application and design constraints of the technical solution. Those skilled in the art can use different ways to implement the described functions for each particular application, but such implementations should not be considered as beyond the scope of the disclosure.

It may be clearly understood by those skilled in the art that, for the convenience and brevity of description, detailed work processes of the systems, apparatuses, and units described above can be referred to the corresponding processes in the above method embodiments, which are not be repeated here.

The above is only detailed implementations of the disclosure, but the scope of protection of the disclosure is not limited herein. Those skilled in the art familiar to the technical field can easily think of changes or substitutions in the technical scope disclosed by the disclosure, which shall be covered by the scope of protection of the disclosure. Thus, the scope of protection of the disclosure shall be based on the scope of protection of the appended claims.

## Claims

1. A method for mobile management (MM), performed by a terminal, comprising:
obtaining a first measurement result, by performing layer 1/layer 2 (L1/L2) cell measurement on a candidate serving cell of the terminal;
sending the candidate serving cell and the first measurement result of the candidate serving cell to a network device;
receiving a cell handover instruction sent by the network device, wherein the cell handover instruction comprises a target serving cell, and the target serving cell is a cell determined from the candidate serving cell; and
handing over, based on the cell handover instruction, from a currently accessed source serving cell of the terminal to the target serving cell.

2. The method according to claim 1, wherein the first measurement result comprises a measurement object for the L1/L2 cell measurement and a first measurement value of the measurement object, wherein sending the candidate serving cell and the first measurement result of the candidate serving cell to the network device comprises:
determining a first measurement result that a first measurement value is greater than or equal to a configured first measurement threshold value, as a reported measurement result; and
sending the reported measurement result and a candidate serving cell corresponding to the reported measurement result to the network device.

3. The method according to claim 1, wherein performing the L1/L2 cell measurement on the candidate serving cell of the terminal comprises:
obtaining a second measurement result, by performing the L1/L2 cell measurement on the source serving cell;
wherein the second measurement result comprises a measurement object for the L1/L2 cell measurement on the source serving cell and a second measurement value of the measurement object, and performing the L1/L2 cell measurement on the candidate serving cell is triggered in response to determining that the second measurement value is less than a configured second measurement threshold value.

4. The method according to any one of claims 1 to 3, wherein before performing the L1/L2 cell measurement on the candidate serving cell of the terminal further comprises:
receiving network configuration information sent by the network device, wherein the network configuration information comprises at least a measurement object and a measurement reporting configuration value for the L1/L2 cell measurement on the candidate serving cell, and a measurement object and a measurement reporting configuration value for the L1/L2 cell measurement on the source serving cell.

5. The method according to claim 4, wherein the measurement object comprises at least one of:
a synchronization signal reference signal received power (SS-RSRP) or a channel state information (CSI)-L1-RSRP.

6. The method according to claim 4, wherein the measurement reporting configuration value comprises a measured and reported measurement threshold value corresponding to each measurement object.

7. A method for mobile management (MM), performed by a network device, comprising:
receiving a candidate serving cell and a first measurement result of the candidate serving cell sent by a terminal;
selecting, based on the first measurement result, a target serving cell from the candidate serving cell; and
sending a cell handover instruction to the terminal, wherein the cell handover instruction comprises the target serving cell.

8. The method according to claim 7, wherein the first measurement result comprises a measurement object for layer 1/layer 2 (L1/L2) cell measurement and a first measurement value of the measurement object, the first measurement result received by the network device is a reported measurement result with a first measurement value being greater than or equal to a configured first measurement threshold value; and
the candidate serving cell received by the network device is a candidate serving cell corresponding to the reported measurement result.

9. The method according to claim 7 or 8, wherein before receiving the candidate serving cell and the first measurement result of the candidate serving cell sent by the terminal further comprises:
sending network configuration information to the terminal, wherein the network configuration information comprises at least a measurement object and a measurement reporting configuration value for the L1/L2 cell measurement of the candidate serving cell, and a measurement object and a measurement reporting configuration value for the L1/L2 cell measurement of a source serving cell.

10. The method according to claim 9, wherein the measurement object comprises at least one of:
a synchronization signal reference signal received power (SS-RSRP) or a channel state information (CSI)-L1-RSRP.

11. The method according to claim 9, wherein the measurement reporting configuration value comprises a measured and reported measurement threshold value corresponding to each measurement object.

12. A communication apparatus, comprising:
a processing module, configured to obtain a first measurement result, by performing layer 1/layer 2 (L1/L2) cell measurement on a candidate serving cell of the terminal, and hand over, based on the cell handover instruction, from a currently accessed source serving cell of the terminal to the target serving cell; and
a transceiver module, configured to send the candidate serving cell and the first measurement result of the candidate serving cell to a network device; and receive a cell handover instruction sent by the network device, wherein the cell handover instruction comprises a target serving cell, and the target serving cell is a cell determined from the candidate serving cell.

13. A communication apparatus, comprising:
a transceiver module, configured to receive a candidate serving cell and a first measurement result of the candidate serving cell sent by a terminal; and send a cell handover instruction to the terminal, wherein the cell handover instruction comprises a target serving cell;
a processing module, configured to select, based on the first measurement result, the target serving cell from the candidate serving cell.

14. A communication device, comprising a processor and a memory storing a computer program, and when the computer program is executed by the processor, the method of any one of claims 1 to 6 is implemented.

15. A communication device, comprising a processor and a memory storing a computer program, and when the computer program is executed by the processor, the method of any one of claims 7 to 11 is implemented.

16. A communication device, comprising: a processor and an interface circuit; wherein
the interface circuit is configured to receive code instructions and transmit code instructions to the processor; and
the processor is configured to execute the code instructions to implement the method of any one of claims 1 to 6.

17. A communication device, comprising: a processor and an interface circuit; wherein
the interface circuit is configured to receive code instructions and transmit code instructions to the processor; and
the processor is configured to execute the code instructions to implement the method of any one of claims 7 to 11.

18. A computer-readable storage medium, configured to store instructions, wherein when the instructions are executed, the method of any one of claims 1 to 6 is implemented.

19. A computer-readable storage medium, configured to store instructions, wherein when the instructions are executed, the method of any one of claims 7 to 11 is implemented.
